# EUROPEAN PATENT SPECIFICATION

(11) **EP 0 313 330 B1**
(45) Date of publication and mention of the grant of the patent: **01.09.1993**
(21) Application number: 88309804.8
(22) Date of filing: 19.10.1988
(51) Int. Cl.: G02F 1/133, G09G 3/36, H04N 9/30

(54) **Parallelogram display elements**
Parallelogramm-Anzeige-Elemente
Eleménts de visualisation en parallèlogramme

(30) Priority: 23.10.1987 US 113040
(43) Date of publication of application: 26.04.1989
(73) Proprietor: ROCKWELL INTERNATIONAL CORPORATION, Cedar Rapids, Iowa 52498 (US)
(72) Inventor: Strathman, Lyle R., Cedar Rapids Iowa 52403 (US); Harwood, Craig E., Cedar Rapids Iowa 52403 (US)
(74) Representative: Jackson, David Spence

(56) References cited:
- EP-A- 0 158 366
- US-A- 4 318 097
- US-A- 4 373 784
- US-A- 4 458 175

## Description

This invention relates to a display matrix which uses elements of more than one different colour, the matrix being of the kind having:
a) a first plurality of parallelogram shaped display elements which each have a top side, a bottom side, a left side, and a right side, and are so arranged in a linear fashion that the top sides of the first plurality display elements are collinear and the bottom sides of the first plurality display elements are also collinear and that the left side and the right side of each of the first plurality display elements are skewed with respect to the top sides and the bottom sides of the first plurality of display the elements; and
b) a second plurality of parallelogram display elements which each have a top side, a bottom side, a left side and a right side, and are so arranged in a linear fashion that the top sides of the second plurality display elements are collinear and the bottom sides of the second plurality display elements are also collinear and that the left side and the right side of each of the second plurality display elements are skewed with respect to the top sides and the bottom sides of the second plurality of display the elements.

The invention also relates to a light filter for displays which uses filter elements of more than one colour or more than one other predetermined light transmissive characteristic, having:
a) a first plurality of parallelogram shaped filter elements which each have a top side, a bottom side, a left side, and a right side, and are so arranged in a linear fashion that the top sides of the first plurality parallelogram shaped filter elements are collinear and the bottom sides of the first plurality parallelogram filter elements are also collinear and that the left sides and the right sides of the first plurality parallelogram shaped filter elements are skewed with respect to the top sides and the bottom sides of the first plurality parallelogram shaped filter elements;
b) a second plurality of parallelogram shaped filter elements which each have a top side, a bottom side, a left side, and a right side, and are so arranged in a linear fashion that the top sides of the second plurality parallelogram filter elements are collinear and the bottom sides of the second plurality parallelogram shaped filter elements are also collinear and that the left sides and the right sides of the second plurality parallelogram shaped filter elements are skewed with respect to the top sides and the bottom sides of the second plurality parallelogram shaped filter elements.

US-A-4458175 describes a display matrix of the kind defined hereinbefore at the beginning in which a viewing screen is formed by overlapping color elements of the subtractive primaries magenta, yellow, and cyan to form an additive primary color - subtractive primary color system in which the color elements, applied to a substrate, are in the form of six-point, star-shaped dots of subtractive primaries overlapped to provide a mosaic of additive primary elements each in the form of a rhombus, so that each six-point, star-shaped dot becomes six rhombi alternating between two of the three additive primaries in sequence around the six points of the star shape. Thus any rhombus of a particular color has adjacent its four sides four other rhombi of the two other colors. Neighboring additive primary elements along any row of such elements of the same color are skewed in different directions.

In the past, display engineers, in an attempt to provide a relatively high resolution display with an efficient active area, have commonly utilized a brick wall or delta approach to display element configuration. In such implementations, the arrays are commonly composed of rectangular red, green, and blue display elements which are arranged in a manner much similar to a staggered half bond brick wall. Such a display is described in EP-A-0158366.

While displays which utilize such a display element array have been commonly used in the past they do suffer from several serious drawbacks. One problem is that when a monochrome color field is displayed on a color display, unwanted stripes or herringbone patterns frequently appear. This can lead to a moire pattern if a single line is drawn on a display of this type. Another problem, which frequently appears, is the spatial modulation of a monochrome line drawn on a color display.

Consequently, there is an existing need for an improved color matrix address display which tends to minimize the unwanted stripes or herringbone patterns and their associated moire patterns and further tends to increase the image quality or monochrome lines.

It is an object of the present invention to provide a display element array having an enhanced image quality for a monochrome line.

It is an advantage of this invention to minimize the gaps in the array between the display elements of like colors.

It is another object of the present invention to enhance picture quality of a monochrome field on a color display.

It is another advantage of the present invention to minimize the stripes or herringbone like patterns on a monochrome field.

According to one aspect of the invention, a display matrix of the kind defined hereinbefore at the beginning is characterised in that the left side and right side of any single display element in respectively the first or second plurality of display elements are parallel with the left side and right side of all the other display elements in respectively the first or second plurality of display elements; immediately adjacent display elements in respectively the first or second plurality of display elements are contiguous; the skew of the first plurality and second plurality of elements respectively is effected in such a fashion that they are slanted respectively to the right and left, or vice versa, of a line drawn perpendicular from the top side and bottom side of each of the respective plurality of display elements; and the top sides of each of the second plurality of display elements are collinear with the bottom sides of each of the first plurality of display elements.

Preferably the display elements consist of color filter elements each positioned adjacent to and aligned with only one individually addressable liquid crystal element exhibiting the property of rotating the polarization plane of transmitted light in response to application of an electric field.

The present display is a "herringboneless" and "moire patternless" display in the sense that the herringbone patterns or unwanted stripes which tend to produce moire patterns, in some circumstances, are minimized by the reduction in effective line width of dark lines created by un-activated display elements existing between the activated display elements. Instead, the effective line width of the largest line of un-activated display elements which can be seen between the activated display elements is reduced by the use of the alternating parallelogram shape of the display elements.

According to another aspect of the invention a light filter of the kind defined hereinbefore at the beginning is characterised in that the left side and the right side of any single filter element in respectively the first or second plurality of filter elements are parallel with the left side and the right side of all the other filter elements in respectively the first or second plurality of filter elements; immediately adjacent filter elements in respectively the first or second plurality of filter elements are contiguous; the skew of the first plurality and second plurality of elements respectively is effected in such a fashion that they are slanted respectively to the right and left, or vice versa, of a line drawn perpendicular from the top side and bottom side of each of the respective plurality of filter elements; and the top sides of each of the second plurality of filter elements are collinear with the bottom sides of each of the first plurality of filter elements.

A preferred embodiment of the invention comprises a color display matrix array having parallel shaped display elements in which the elements in one set of alternate rows all have a slant to the right, while the elements in the other set of alternate rows have a slant to the left.

### BRIEF DESCRIPTION OF THE DRAWINGS

The invention will be best understood by a reading of the description in conjunction with the drawings, in which:
Fig. 1 is a schematic representation of a typical rectangular brick wall type display element arrangement of the prior art.
Fig. 2 is a plot of intensity versus position long line L of Figure 1 which represents two rows of elements.
Fig. 3 is a schematic representation of a display element arrangement of the present invention which displays the non-rectangular parallelogram shaped display elements and the row alternating parallelogram slant directions.
Fig. 4 is a plot of intensity versus position alone line L3 of Figure 3 which represents two rows of elements.

### DETAILED DESCRIPTION

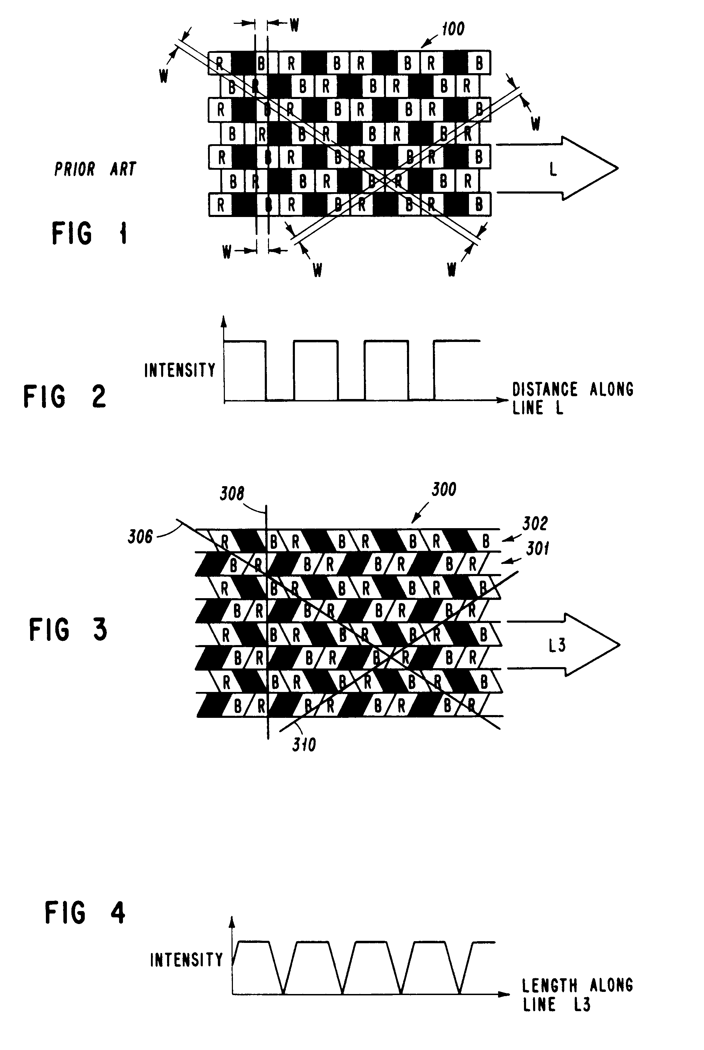

Now referring to Figure 1 there is shown a typical display element arrangement of the prior art, which utilizes an array of rectangular shaped color display elements, generally designated 100. Array 100 can be present in numerous types of displays including liquid crystal, thin film electroluminescent, and cathode ray tube type displays. Each rectangular box is representative of a separate display element of a separate color. The R represent a display element which corresponds to a red color. The B represents a display element which corresponds to a blue color. Typically, displays utilize three separate color display elements with a third color being green. The shaded display elements in Figure 1 are representative of the green display elements which have been chosen to be represented as being activated. In the configuration of the display as shown, it would have a monochrome green color. However, the separation of the parallel lines between the activated green display elements and extending across the array represents the effective width W of the widest non-activated line which could be present between the activated display elements. Depending upon the effective width W, unwanted stripes or even herringbone patterns may appear to the viewer.

When the light intensity of the desired monochrome color is plotted versus the position along a line L of Figure 1 it results in a relatively abrupt display intensity pattern as is shown in Figure 2. It becomes apparent that unwanted lines may appear upon the display in positions corresponding to the intensity troughs.

Now referring to Figure 3, there is shown a schematic representation of an array of alternating rows of non-rectangular parallelogram display elements, generally designated 300, which is an embodiment of the present invention. A delta or brickwall like array is shown and described herein as an example only and the present invention may be applied to numerous other matrix arrays having various display element configurations, including but not limited to quad, diagonal and the like. Array 300 is shown substantially similar to array 100 of Figure 1 with the primary differences being in the shape of the display elements and the orientation of the parallelogram slant in an alternating row pattern. Array 300 has a first row 302 of display elements, each having a parallelogram slant which extends left of vertical, and further has an adjacent row 301 with parallelogram display elements that slant right of vertical. The particular oblique angle shown is merely exemplary, and can be varied in order to customize the matrix to meet other design criteria. This alternating parallelogram slant pattern is repeated throughout the remainder of the array. Lines 306, 308, and 310 have been drawn through the array and represent the maximum width line which can extend across the array in the non-activated portions thereof without meeting with an activated display element. The alternating slant parallelogram display element array of the present invention provides for a greatly reduced maximum effective non-activated line width which can extend between the activated elements.

When the light intensity of the activated display elements is plotted versus the length along a line L3 of Figure 3 a significant reduction in the abruptness of the intensity variations is present and is shown in Figure 4. It becomes apparent that the unwanted lines, which may appear in the array of Figure 1, are either eliminated or greatly reduced in intensity.

It is thought that the alternating slant parallelogram display element subdivision array of the present invention and many of its intended advantages will be understood from the foregoing description.

## Claims

1. A display matrix which uses elements of more than one different colour, having:
a) a first plurality of parallelogram shaped display elements (302) which each have a top side, a bottom side, a left side, and a right side, and are so arranged in a linear fashion that the top sides of the first plurality display elements are collinear and the bottom sides of the first plurality display elements are also collinear and that the left side and the right side of each of the first plurality display elements are skewed with respect to the top sides and the bottom sides of the first plurality of display elements; and
b) a second plurality of parallelogram display elements (301) which each have a top side, a bottom side, a left side and a right side, and are so arranged in a linear fashion that the top sides of the second plurality display elements are collinear and the bottom sides of the second plurality display elements are also collinear and that the left side and the right side of each of the second plurality of display elements are skewed with respect to the top sides and the bottom sides of the second plurality of display elements;
characterised in that the left side and right side of any single display element in respectively the first or second plurality of display elements are parallel with the left side and right side of all the other display elements in respectively the first or second plurality of display elements; immediately adjacent display elements in respectively the first or second plurality of display elements are contiguous; the skew of the first plurality and second plurality of elements respectively is effected in such a fashion that they are slanted respectively to the right and left or vice versa of a line drawn perpendicular from the top side and bottom side of each of the respective plurality of display elements; and the top sides of each of the second plurality of display elements are collinear with the bottom sides of each of the first plurality of display elements.

2. A display matrix according to Claim 1, wherein the display elements consist of color filter elements each positioned adjacent to and aligned with only one individually addressable liquid crystal element exhibiting the property of rotating the polarization plane of transmitted light in response to application of an electric field.

3. A display matrix according to claim 1 or 2, wherein the matrix comprises a multiplicity of the first and second pluralities of elements, and each plurality forms a row in the matrix.

4. A light filter for displays which uses filter elements of more than one colour or more than one other predetermined light transmissive characteristic, having:
a) a first plurality of parallelogram shaped filter elements which each have a top side, a bottom side, a left side, and a right side, and are so arranged in a linear fashion that the top sides of the first plurality parallelogram shaped filter elements are collinear and the bottom sides of the first plurality parallelogram filter elements are also collinear and that the left sides and the right sides of the first plurality parallelogram shaped filter elements are skewed with respect to the top sides and the bottom sides of the first plurality parallelogram shaped filter elements;
b) a second plurality of parallelogram shaped filter elements which each have a top side, a bottom side, a left side and a right side, and are so arranged in a linear fashion that the top sides of the second plurality parallelogram filter elements are collinear and the bottom sides of the second plurality parallelogram shaped filter elements are also collinear and that the left sides and the right sides of the second plurality parallelogram shaped filter elements are skewed with respect to the top sides and the bottom sides of the second plurality parallelogram shaped filter elements;
characterised in that the left side and the right side of any single filter element in respectively the first or second plurality of filter elements are parallel with the left side and the right side of all the other filter elements in respectively the first or second plurality of filter elements; immediately adjacent filter elements in respectively the first or second plurality of filter elements are contiguous; the skew of the first plurality and second plurality of elements respectively is effected in such a fashion that they are slanted respectively to the right and left, or vice versa, of a line drawn perpendicular from the top side and bottom side of each of the respective plurality of filter elements; and the top sides of each of the second plurality of filter elements are collinear with the bottom sides of each of the first plurality of filter elements.

## Patentansprüche

1. Eine Anzeige-Matrix mit Elementen von mehr als einer unterschiedlichen Farbe, mit:
(a) einer ersten Vielzahl parallelogrammförmiger Anzeigeelemente (302), die jeweils eine Oberseite, Unterseite, eine linke und rechte Seite aufweisen und linear derart angeordnet sind, daß die Oberseiten der ersten Vielzahl von Anzeigeelementen kollinear angeordnet sind, daß die Unterseiten der ersten Vielzahl von Anzeigeelementen ebenfalls kollinear angeordnet sind und daß die linke und rechte Seite jedes Anzeigeelements aus der ersten Vielzahl von Anzeigeelementen mit Bezug auf die Ober- und Unterseiten der ersten Vielzahl von Anzeigeelementen schräg verlaufen; und
(b) einer zweiten Vielzahl von parallelogrammförmigen Anzeigeelementen (301), die jeweils eine Oberseite, Unterseite, eine linke und rechte Seite aufweisen und linear derart angeordnet sind, daß die Oberseiten der zweiten Vielzahl von Anzeigeelemten kollinear sind, daß die Unterseiten der zweiten Vielzahl von Anzeigeelementen ebenfalls kollinear sind, und daß die linke und rechte Seite jedes Anzeigeelements aus der zweiten Vielzahl von Anzeigeelementen relativ zu den Ober- und Unterseiten der zweiten Vielzahl von Anzeigeelementen schräg verlaufen;
dadurch **gekennzeichnet,**
daß die linke und rechte Seite jedes einzelnen Anzeigeelements in jeweils der ersten oder zweiten Vielzahl von Anzeigeelementen parallel zur rechten und linken Seite aller anderen Anzeigeelementen in jeweils der ersten oder zweiten Vielzahl von Anzeigeelementen verlaufen, daß unmittelbar benachbarte Elemente in jeweils der ersten oder zweiten Vielzahl von Anzeigeelementen aneinandergrenzen; daß die Schrägstellung der ersten und zweiten Vielzahl von Elementen jeweils in der Art ausgebildet ist, daß diese jeweils auf die rechte und linke Seite oder umgekehrt einer Linie geneigt sind, die senkrecht zur Ober- und Unterseite von jedem der entsprechenden Vielzahl von Anzeigeelementen verläuft; und daß die Oberseiten jedes der zweiten Vielzahl von Anzeigeelementen kollinear mit den Unterseiten jedes der ersten Vielzahl von Anzeigeelementen verlaufen.

2. Anzeige-Matrix nach Anspruch 1,
bei der die Anzeigeelemente aus Farbfilterelementen bestehen, die jeweils neben und fluchtend mit nur einem individuell adressierbaren Flüssigkristallelement angeordnet sind, das die Eigenschaft aufweist, die Polarisationsebene des durchgelassenen Lichts in Abhängigkeit von der Anlage eines elektrischen Felds zu rotieren.

3. Anzeige-Matrix nach Anspruch 1 oder 2,
bei der die Matrix eine Vielzahl der ersten und zweiten Vielzahl von Elementen aufweist, wobei jede Vielzahl eine Reihe in der Matrix bildet.

4. Ein Lichtfilter für Anzeigen, der Filterelemente für mehr als eine Farbe oder mehr als eine andere vorbestimmte Lichtdurchlaßcharakteristik aufweist, mit:
(a) einer ersten Vielzahl parallelogrammförmiger Filterelemente, die jeweils eine Oberseite, eine Unterseite, eine linke und eine rechte Seite aufweisen und linear derart angeordnet sind, daß die Oberseiten der ersten Vielzahl parallelogrammförmiger Filterelemente kollinear und die Unterseiten der ersten Vielzahl parallelogrammförmiger Filterelemente ebenfalls kollinear angeordnet sind, und daß die linken und rechten Seiten der ersten Vielzahl parallelogrammförmiger Filterelemente relativ zu den Ober- und Unterseiten der ersten Vielzahl parallelogrammförmiger Filterelemente schräg verlaufen;
(b) einer zweiten Vielzahl parallelogrammförmiger Filterelemente, die jeweils eine Oberseite, eine Unterseite, eine linke und rechte Seite aufweisen und linear derart angeordnet sind, daß die Oberseiten der zweiten Vielzahl parallelogrammförmiger Filterelemente kollinear und die Unterseiten der zweiten Vielzahl parallogrammförmiger Filterelemente ebenfalls kollinear angeordnet sind, und daß die linken und rechten Seiten der zweiten Vielzahl parallelogrammförmiger Filterelemente relativ zu den Ober- und Unterseiten der zweiten Vielzahl parallelogrammförmiger Filterelemente schräg verlaufen;
dadurch **gekennzeichnet,**
daß die linke und rechte Seite jedes einzelnen Filterelements in jeweils der ersten oder zweiten Vielzahl von Filterelementen parallel zu der linken und rechten Seite aller anderen Filterelemente in jeweils der ersten oder zweiten Vielzahl von Filterelementen verlaufen; daß unmittelbar benachbarte Filterelemente in jeweils der ersten oder zweiten Vielzahl von Filterelementen aneinandergrenzen; daß die Schrägstellung der ersten und zweiten Vielzahl von Filterelementen jeweils in einer derartigen Weise vorgesehen ist, daß diese jeweils zur rechten und linken Seite oder umgekehrt einer Linie geneigt sind, die senkrecht zu der Oberseite und Unterseite jedes der entsprechenden Vielzahl von Filterelementen verläuft; und daß die Oberseiten jedes der zweiten Vielzahl von Filterelementen kollinear zu den Unterseiten jedes der ersten Vielzahl von Filterelementen verlaufen.

## Revendications

1. Matrice d'affichage qui utilise des éléments de plusieurs couleurs différentes, ayant :
a) une première pluralité d'éléments (302) d'affichage en forme de parallélogrammes qui ont chacun un côté supérieur, un côté inférieur, un côté gauche, et un côté droit, et sont agencés selon une ligne de telle sorte que les cotés supérieurs de la première pluralité d'éléments d'affichage sont colinéaires et que les côtés inférieurs de la première pluralité d'éléments d'affichage sont également colinéaires et que le côté gauche et le côté droit de chaque élément de la première pluralité d'éléments d'affichage sont en oblique par rapport aux côtés supérieurs et aux côtés inférieurs de la première pluralité d'éléments d'affichage, et
b) une seconde pluralité d'éléments (301) d'affichage en forme de parallélogrammes qui ont chacun un côté supérieur, un côté inférieur, un côté gauche, et un côté droit, et sont agencés selon une ligne de telle sorte que les cotés supérieurs de la seconde pluralité d'éléments d'affichage sont colinéaires et que les côtés inférieurs de la seconde pluralité d'éléments d'affichage sont également colinéaires et que le côté gauche et le côté droit de chaque élément de la seconde pluralité d'éléments d'affichage sont en oblique par rapport aux côtés supérieurs et aux côtés inférieurs de la seconde pluralité d'éléments d'affichage,
caractérisée en ce que le côté gauche et le côté droit d'un élément quelconque d'affichage situé respectivement dans la première ou la seconde pluralité d'éléments d'affichage sont parallèles au côté gauche et au côté droit de tous les autres éléments d'affichage situés respectivement dans la première ou la seconde pluralité d'éléments d'affichage, les éléments d'affichage immédiatement adjacents situés respectivement dans la première ou la seconde pluralité d'éléments d'affichage étant contigus, l'obliquité de la première et de la seconde pluralité d'éléments respectivement étant réalisée d'une manière telle qu'ils soient respectivement inclinés vers la droite et vers la gauche ou vice versa d'une ligne tracée perpendiculairement au coté supérieur et au côté inférieur de chacune des pluralités d'éléments d'affichage respectives, et les cotés supérieurs de chacune des secondes pluralités d'éléments d'affichage étant colinéaires avec les côtés inférieurs de chacune des premières pluralités d'éléments d'affichage.

2. Matrice d'affichage selon la revendication 1, dans laquelle les éléments d'affichage sont constitués d'éléments formant filtres de couleur chacun étant positionné adjacent à un seul élément individuel à cristal liquide pouvant être adressé et aligné avec ce dernier, présentant la propriété de faire tourner le plan de polarisation d'une lumière transmise en réponse à l'application d'un champ électrique.

3. Matrice d'affichage selon la revendication 1 ou 2, dans laquelle la matrice est constituée d'une multiplicité de premières et secondes pluralité d'éléments, et que chaque pluralité forme une rangée dans la matrice.

4. Filtre de lumière pour affichage qui utilise des éléments formant filtres de plus d'une couleur ou de plus d'une autre caractéristique transmissible d'une lumière prédéterminée, comportant :
a) une première pluralité d'éléments formant filtres en forme de parallélogrammes qui ont chacun un côté supérieur, un côté inférieur, un côté gauche, et un côté droit, et sont agencés selon une ligne de telle sorte que les cotés supérieurs de la première pluralité d'éléments formant filtres en forme de parallélogrammes sont colinéaires et que les côtés inférieurs de la première pluralité d'éléments formant filtres en forme de parallélogrammes sont également colinéaires et que les côtés gauches et les côtés droits de la première pluralité d'éléments formant filtres en forme de parallélogrammes sont en oblique par rapport aux côtés supérieurs et aux côtés inférieurs de la première pluralité d'éléments formant filtres en forme de parallélogrammes, et
b) une seconde pluralité d'éléments formant filtres en forme de parallélogrammes qui ont chacun un côté supérieur, un côté inférieur, un côté gauche, et un côté droit, et sont agencés selon une ligne de telle sorte que les cotés supérieurs de la seconde pluralité d'éléments formant filtres en forme de parallélogrammes sont colinéaires et que les côtés inférieurs de la seconde pluralité d'éléments formant filtres en forme de parallélogrammes sont également colinéaires et que les côtés gauches et les côtés droits de la seconde pluralité d'éléments formant filtres en forme de parallélogrammes sont en oblique par rapport aux côtés supérieurs et aux côtés inférieurs de la seconde pluralité d'éléments formant filtres en forme de parallélogrammes,
caractérisée en ce que le côté gauche et le côté droit d'un unique élément quelconque formant filtre situé respectivement dans la première ou la seconde pluralité d'éléments formant filtres sont parallèles au côté gauche et au côté droit de tous les autres éléments formant filtres situés respectivement dans la première ou la seconde pluralité d'éléments formant filtres, les éléments formant filtres immédiatement adjacents situés respectivement dans la première ou la seconde pluralité d'éléments formant filtres étant contigus, l'obliquité de la première et de la seconde pluralité d'éléments respectivement étant réalisée d'une manière telle qu'ils soient respectivement inclinés vers la droite et vers la gauche ou vice versa d'une ligne tracée perpendiculairement au coté supérieur et au côté inférieur de chacune des pluralités d'éléments formant filtres respectives, et les cotés supérieurs de chacune des secondes pluralités d'éléments formant filtres étant colinéaires avec les côtés inférieurs de chacune des premières pluralités d'éléments formant filtres.
